# EUROPEAN PATENT APPLICATION

(11) **EP 3 543 912 A1**
(43) Date of publication of application: **25.09.2019**
(21) Application number: 19164669.4
(22) Date of filing: 22.03.2019
(51) Int. Cl.: G06K 9/72, G06K 9/03

(54) **IMAGE PROCESSING DEVICE, IMAGE PROCESSING METHOD, AND IMAGE PROCESSING PROGRAM**

(30) Priority: 22.03.2018 JP 2018055198
(71) Applicant: Seiko Epson Corporation, Tokyo 160-8801 (JP)
(72) Inventor: TAKABAYASHI, Nobuhisa, Suwa-shi, Nagano 392-8502 (JP); KUBOTA, Tsukasa, Suwa-shi, Nagano 392-8502 (JP); TAKEDA, Yu, Suwa-shi, Nagano 392-8502 (JP); MATSUI, Kazuteru, Suwa-shi, Nagano 392-8502 (JP)
(74) Representative: Miller Sturt Kenyon

(57) **Abstract**

An image processing device includes an acquisition unit that acquires a read image generated by reading a receipt or a bill, a first character recognition unit that performs first character recognition processing on the read image, a second character recognition unit that performs second character recognition processing whose character recognition accuracy is higher than that of the first character recognition processing, a storage unit that stores in advance relevant information where a specific character and a position of a target area to be a target of the second character recognition processing are related to each other, and a control unit that extracts the specific character from a result of the first character recognition processing performed by the first character recognition unit, specifies the target area in the read image based on the extracted specific character and the relevant information, and causes the second character recognition unit to perform the second character recognition processing on the specified target area.

## Description

### BACKGROUND

### 1. Technical Field

The present disclosure relates to an image processing device, an image processing method, and an image processing program for performing character recognition processing.

### 2. Related Art

A data processing device is disclosed that converts a character image of a receipt read through an image input device into character code data and extracts data such as date, item, price, consumption tax, and the like from the character code data based on a format, which is layout information of a receipt stored in a format storage unit (refer to JP-A-11-265409).

Previously, as described in JP-A-11-265409, when trying to detect specific information such as, for example, date and a sum of money from information read from a read image of a receipt, the information may not be correctly detected.

### SUMMARY

An image processing device includes an acquisition unit that acquires a read image generated by reading a receipt or a bill, a first character recognition unit that performs first character recognition processing, a second character recognition unit that performs second character recognition processing whose character recognition accuracy is higher than that of the first character recognition processing, a storage unit that stores in advance relevant information where a specific character and a position of a target area to be a target of the second character recognition processing are related to each other, and a control unit that extracts the specific character from a result of the first character recognition processing performed on the read image by the first character recognition unit, specifies the target area in the read image based on the extracted specific character and the relevant information, and causes the second character recognition unit to perform the second character recognition processing on the specified target area.

### BRIEF DESCRIPTION OF THE DRAWINGS

Embodiments of the invention will now be described by way of example only with reference to the accompanying drawings, wherein like numbers reference like elements.
Fig. 1 is a diagram simply showing a configuration of a system.
Fig. 2 is a flowchart showing processing performed by an image processing device.
Fig. 3 is a diagram showing a specific example of processing of steps S110 to S130.
Fig. 4 is a diagram showing an example of a specific character table.
Fig. 5 is a flowchart showing processing according to a third embodiment.
Fig. 6 is a diagram simply showing a configuration of a system according to the third embodiment.

### DESCRIPTION OF EXEMPLARY EMBODIMENTS

Hereinafter, embodiments of the present disclosure will be described with reference to the drawings. The drawings are merely examples for explaining the embodiments.

### 1. Outline Description of System

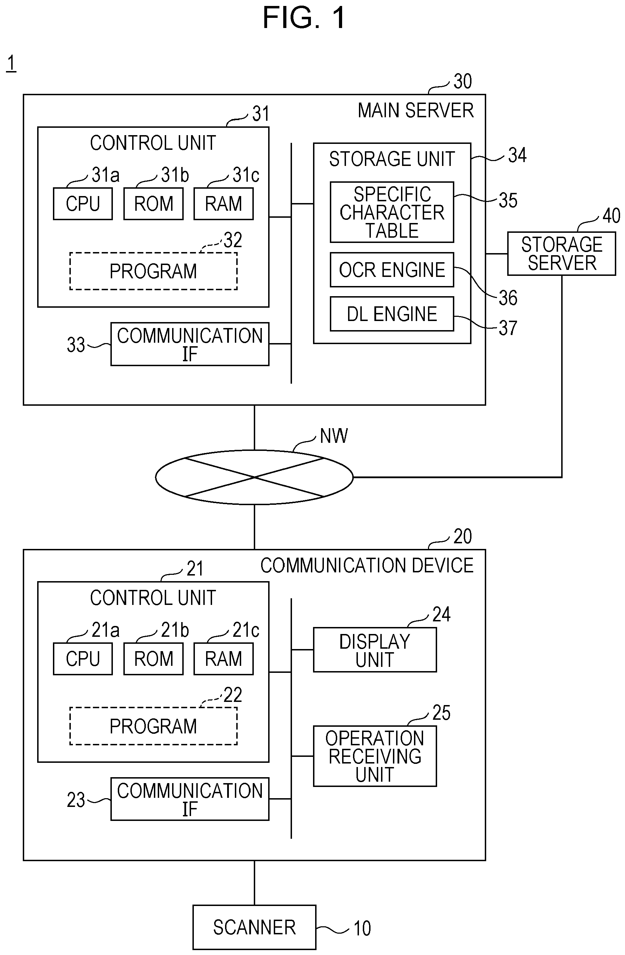

Fig. 1 simply shows a configuration of a system 1 according to a present embodiment. The system 1 includes a scanner 10, a communication device 20, a main server 30, and a storage server 40. The main server 30 and the storage server 40 are servers that can provide a cloud service to a user through an Internet communication network.

The scanner 10 is a reading device that can optically read a document, generate image data having a predetermined format as a read result, and output the image data to the outside. The scanner 10 may be a combined machine having a plurality of functions such as a print function and a facsimile communication function in addition to a function of the scanner. The scanner 10 is communicably coupled to the communication device 20 with wired or wireless communication and transmits the image data to the communication device 20.

The communication device 20 is realized by, for example, a personal computer (PC), a smartphone, a tablet type terminal, a mobile phone, or an information processing device having processing capability similar to that of those devices. The communication device 20 includes a control unit 21, a communication interface (IF) 23, a display unit 24, an operation receiving unit 25, and the like. The control unit 21 includes one or a plurality of ICs having a CPU 21a as a processor, a ROM 21b, a RAM 21c, and the like and the other memories and the like.

In the control unit 21, the processor (CPU 21a) controls the communication device 20 by performing arithmetic processing according to a program stored in the ROM 21b or a memory or the like other than the ROM 21b by using the RAM 21c or the like as a work area. The control unit 21 is mounted with a program 22. The program 22 is an application for uploading image data that the scanner 10 generates by reading a document to the main server 30.

A communication IF 23 is a general term for one or a plurality of IFs for the communication device 20 to perform wired or wireless communication with outside in compliance with a predetermined communication protocol such as a known communication standard. The communication device 20 is coupled not only to the scanner 10 but also to a network NW through the communication IF 23. The network NW includes a local area network (LAN), an Internet communication network, other public lines, and the like.

The display unit 24 is a means for displaying visual information and is composed of, for example, a liquid crystal display (LCD), an organic EL display, or the like. The display unit 24 may be configured to include a display and a drive circuit for driving the display. The operation receiving unit 25 is a means for receiving an operation of a user and is realized by, for example, physical buttons, a touch panel, a mouse, a keyboard, and/or the like. Of course, the touch panel may be realized as one function of the display unit 24. A combination of the display unit 24 and the operation receiving unit 25 may be called an operation panel of the communication device 20.

The scanner 10 and the communication device 20 may be independent devices, respectively, as illustrated in Fig. 1. However, the whole of them may be actually included in one device. Specifically, the scanner 10 may include a configuration of the communication device 20 so as to be realized as a combined machine having a function to communicate with the outside through the network NW.

The main server 30 is realized by one or a plurality of information processing devices that function as a server on the network NW. The main server 30 includes a control unit 31, a communication IF 33, a storage unit 34, and the like. The control unit 31 includes one or a plurality of ICs having a CPU 31a as a processor, a ROM 31b, a RAM 31c, and the like and the other memories and the like. In the control unit 31, the processor (CPU 31a) controls the main server 30 by performing arithmetic processing according to a program stored in the ROM 31b, the storage unit 34 or, or the like by using the RAM 31c or the like as a work area. The control unit 31 is mounted with a program 32 as one of programs. The program 32 corresponds to an image processing program executed by the control unit 31 of the main server 30. The main server 30 that executes the program 32 corresponds to a specific example of an image processing device. The processor need not be limited to one CPU, but may have a configuration where a hardware circuit of a plurality of CPUs and ASICs and the like performs processing, or may have a configuration where a CPU and a hardware circuit cooperate to perform processing.

A communication IF 33 is a general term for one or a plurality of IFs for the main server 30 to perform wired or wireless communication with outside in compliance with a predetermined communication protocol such as a known communication standard. The storage unit 34 is, for example, a storage means composed of a hard disk drive and/or a non-volatile memory. In the present embodiment, the storage unit 34 stores in advance a specific character table 35, a program of an OCR (Optical Character Recognition) engine 36, a program of a DL (Deep Learning) engine 37, and the like. The OCR engine 36 and the DL engine 37 are a kind of software. Not only the program 32 may be called an image processing program, but also the OCR engine 36, the DL engine 37, and the program 32 may be collectively called an image processing program.

In the example of Fig. 1, the main server 30 is communicably coupled to the storage server 40. The storage server 40 is also realized by one or a plurality of information processing devices that function as a server on the network NW. The storage server 40 is a server for acquiring data from the main server 30 and storing the data. The main server 30 and the storage server 40 need not be clearly separated from each other as two devices, but a configuration may be employed in which, for example, a common server functions as the main server 30 and the storage server 40. Although not shown in Fig. 1, a display unit and an operation receiving unit required for a user to operate the main server 30 and the storage server 40 may be coupled to these servers.

In order to easily distinguish the control unit 31, the program 32, and the communication IF 33 of the main server 30, and the control unit 21, the program 22, and the communication IF 23 of the communication device 20 from each other, for convenience, the control unit 31, the program 32, the communication IF 33, the control unit 21, the program 22, and the communication IF 23 may be represented as a first control unit 31, a first program 32, a first communication IF 33, a second control unit 21, a second program 22, and a second communication IF 23, respectively.

### 2. Character Recognition Processing:

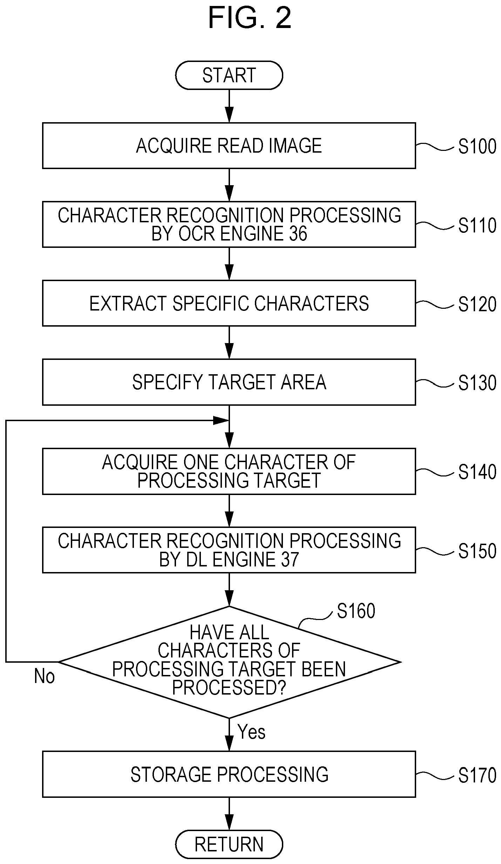

Fig. 2 is a flowchart showing image processing performed by the control unit 31 of the main server 30 according to the program 32. The flowchart shows processing for detecting information of a specific item from a read result of a document read by the scanner 10. It can be said that at least a part of the flowchart shows an image processing method.

In the system 1, first, the scanner 10 generates image data by reading a document that is arbitrarily set by a user. In the present embodiment, the document that the user causes the scanner 10 to read is a voucher such as a receipt issued by a shop or the like or a bill. Hereinafter, the receipt or the bill which the user causes to be read by the scanner 10 is called merely a document. The scanner 10 transmits the image data (hereinafter referred to as read image) generated by reading a document to the communication device 20. The control unit 21 of the communication device 20 may instruct the scanner 10 to start reading the document through the communication IF 23, and the scanner 10 may start reading the document according to the instruction to start reading the document from the control unit 21.

In the communication device 20, the control unit 21 that executes the program 22 uploads the read image received from the scanner 10 to the main server 30 through the communication IF 23 and the network NW.

In the main server 30, the control unit 31 acquires the read image transmitted from the communication device 20 through the communication IF 33 (step S100). The control unit 31 may temporarily store the read image received from the communication device 20 into the storage unit 34 and, in step S100, the control unit 31 may acquire the read image from the storage unit 34. Step S100 corresponds to an acquisition step of acquiring a read image generated by reading a receipt or a bill. In a point of executing step S100, it can be said that the communication IF 33 and the control unit 31 function as an acquisition unit that acquires a read image.

In step S110, the control unit 31 starts the OCR engine 36 and causes the OCR engine 36 to perform character recognition processing on the read image acquired in step S100. The OCR engine 36 converts characters recognized from the read image into character data (text data). In the present specification, to recognize characters is also referred to as to estimate characters. The control unit 31 acquires a result of the character recognition processing performed by the OCR engine 36. The character recognition processing performed by the OCR engine 36 is referred to as first character recognition processing. Therefore, step S110 corresponds to a first character recognition processing step of performing the first character recognition processing on the read image. The storage unit 34 that stores the OCR engine 36 and the processor (CPU 31a) that realizes the character recognition processing by using the OCR engine 36 correspond to a first character recognition unit that performs the first character recognition processing.

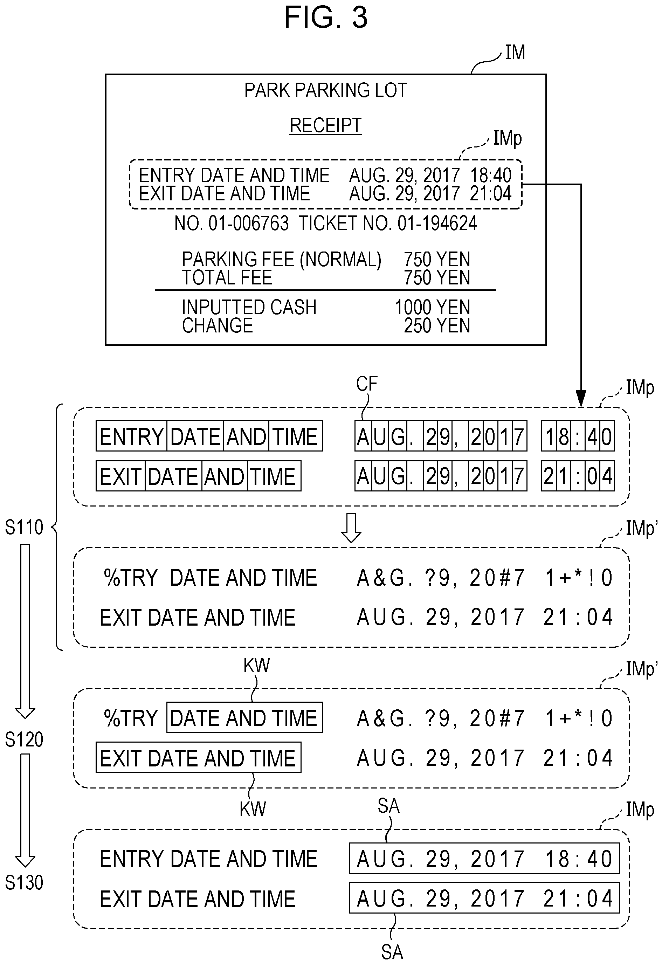

Fig. 3 is a diagram for explaining mainly processing of steps S110 to S130 by using a specific example. In the uppermost part of Fig. 3, a read image IM acquired by the control unit 31 in step S100 is shown. In the example of Fig. 3, the read image IM is image data generated by the scanner 10 that reads a receipt issued from a pay parking lot used by a user.

In Fig. 3, a range represented by a code IMp indicates a partial area in the read image IM.

In step S110, regarding an image which is included in the read image IM and seems to be a character, the OCR engine 36 sets a rectangular area CF surrounding the image which seems to be a character. For convenience of the page, Fig. 3 shows a state where the rectangular area CF is set for each character in a partial area IMp. However, the OCR engine 36 also sets the rectangular area CF for each character included in areas other than the partial area IMp of the read image IM.

In step S110, the OCR engine 36 estimates the character in the rectangular area CF from an image for each rectangular area CF by using a predetermined algorithm, and outputs the estimated characters (character data as a conversion result) as a result of the character recognition processing. In Fig. 3, a character string indicated by a code IMp' represents the result of the character recognition processing performed on the partial area IMp by the OCR engine 36. The OCR engine 36 is a general-purpose OCR engine that can estimate many types of characters such as a Chinese character, a hiragana character, a katakana character, a numeric character, an alphabet, other symbols, and the like from an inputted image. However, a result of the estimate may not be accurate. In Fig. 3, when comparing characters in the partial area IMp and the character string IMp' which is a result of the character recognition processing performed on the partial area IMp by the OCR engine 36, for example, in step S110, characters "EN" are recognized as a symbol "%".

In step S120, the control unit 31 extracts specific characters registered in advance from the result of the character recognition processing performed on the read image in step S110. The specific characters are registered in the specific character table 35 in advance. Step S120 corresponds to an extraction step of extracting specific characters included in the receipt or the bill from a result of the first character recognition processing.

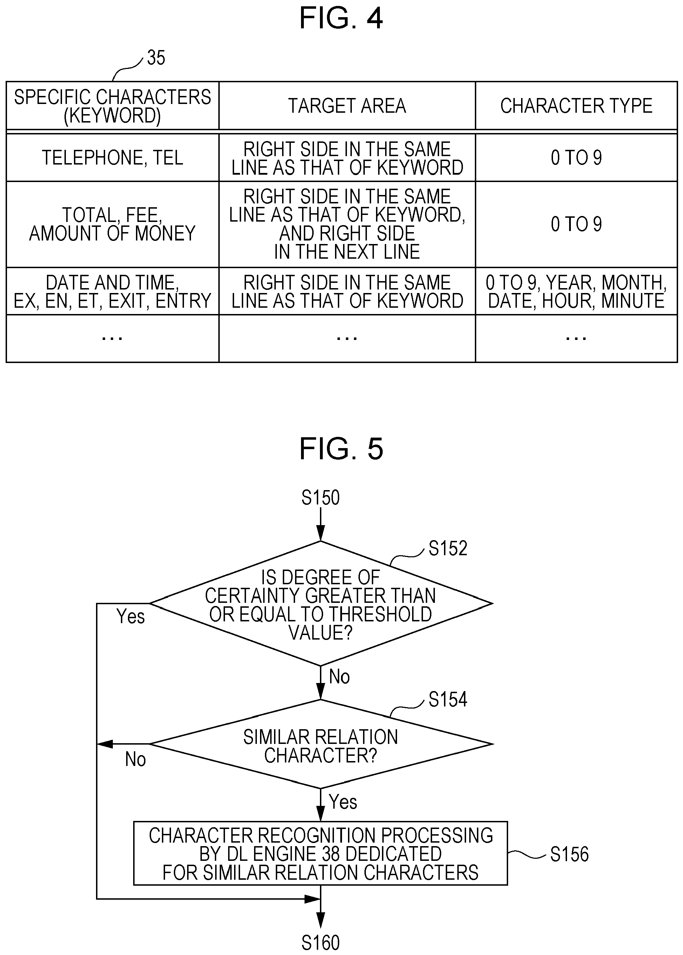

Fig. 4 shows an example of the specific character table 35. The specific character table 35 is an information table where specific characters and a position of a target area to be read corresponding to the specific characters are related to each other. Further, the specific character table 35 defines a character type to be recognized in the target area. The specific character table 35 is an example of relevant information.

The specific characters are a character or a character string that suggests an existence of information of a specific item, which is required to be detected accurately in particular from information written on the document. The information of the specific item is, for example, contents such as a telephone number of an issuing source of the document (a transaction partner), an issuing date of the document (a transaction date), and a transaction amount. In the receipt issued from the pay parking lot as described above, contents of a transaction date and time, that is, an entry date and time and an exit date and time, also correspond to the information of the specific item.

In the example of Fig. 4, words such as "TELEPHONE" and "TEL" are registered in the specific character table 35 as specific characters that suggest an existence of a telephone number. The specific characters are also called a keyword. Further, in the specific character table 35, keywords such as "TOTAL", "FEE", and "AMOUNT OF MONEY" are registered as specific characters that suggest an existence of a transaction amount. Further, in the specific character table 35, keywords such as "DATE AND TIME", "EX", "EN", "ET", "EXIT", and "ENTRY" are registered as specific characters that suggest an existence of an entry date and time and an exit date and time.

For example, in a receipt, a telephone number is often written on the right side in the same line as that where specific characters "TELEPHONE" or "TEL" are written. Further, in a receipt, a total amount of money is often written on the right side in the same line as that where specific characters "TOTAL", "FEE", or "AMOUNT OF MONEY" are written or on the right side in the next line. Therefore, in the specific character table 35, an appropriate position of the target area such as "RIGHT SIDE IN THE SAME LINE AS THAT OF KEYWORD" or "RIGHT SIDE IN THE SAME LINE AS THAT OF KEYWORD, AND RIGHT SIDE IN THE NEXT LINE" is defined in advance according to the specific characters (keyword). In other words, a positional relationship of the target area with respect to the specific characters is defined in the specific character table 35.

The specific characters registered in the specific character table 35 and the positional relationship of the target area with respect to the specific characters are not limited to the example of Fig. 4. For example, in a case of a bill or a receipt, a numerical value of the total amount of money is often written into a specific position (for example, on the left side in the next line) with respect to a written name. Therefore, in the specific character table 35, a character string that represents a honorific title of the name (as an example, "Dear" or the like) may be registered as the specific characters, and an area on the left side of the next line with respect to the specific characters may be defined as the target area. In the example of Fig. 4, in the specific character table 35, the positional relationship of the target area with respect to the specific characters is defined by using a line. However, for example, an upper, lower, left, or right area with respect to the specific characters may be simply defined as the target area.

According to the example of Fig. 3, in step S120, the control unit 31 can extract character strings "TRY DATE AND TIME" and "EXIT DATE AND TIME" as keywords KW by referring to the specific character table 35 from the result of the character recognition processing performed on the read image IM in step S110. As known by referring to the read image IM and the specific character table 35, in step S120, the control unit 31 also extracts a character string "FEE" as a keyword from the result of the character recognition processing performed on the read image IM in step S110.

In step S130, the control unit 31 specifies a target area to be a target of character recognition processing using the DL engine 37 in the read image based on the specific characters extracted in step S120 and the specific character table 35. Step S130 corresponds to a target area specification step. According to the example of Fig. 3, in step S120, the control unit 31 extracts the character strings "TRY DATE AND TIME" and "EXIT DATE AND TIME" as keywords KW (specific characters) from the result of the character recognition processing performed on the read image IM in step S110. Therefore, in step S130, the control unit 31 refers to the specific character table 35 and recognizes that target areas corresponding to the keywords KW "TRY DATE AND TIME" and "EXIT DATE AND TIME" are "RIGHT SIDE IN THE SAME LINE AS THAT OF KEYWORD". Then, as shown in Fig. 3, the control unit 31 specifies an area, which is in the same line as that of the character string "TRY DATE AND TIME" and which is on the right side of the character string "TRY DATE AND TIME" in the read image IM, as a target area SA, and further specifies an area, which is in the same line as that of the character string "EXIT DATE AND TIME" and which is on the right side of the character string "EXIT DATE AND TIME" in the read image IM, as a target area SA.

In step S140, the control unit 31 acquires one character to be a processing target in the next step S150 from the target areas specified in step S130. Referring to Fig. 3, the control unit 31 acquires one character to be a processing target in step S150 from the target areas SA. More specifically, in step S140, the control unit 31 acquires an image for each rectangular area CF that is set for each character in the read image IM in the character recognition processing in step S110 as one character in the target areas SA.

In step S150, the control unit 31 starts the DL engine 37 and causes the DL engine 37 to perform character recognition processing on the processing target character acquired in step S140 (an image of any one of the rectangular areas CF in the target areas SA). The processing target character is inputted into the DL engine 37, and the DL engine 37 converts the processing target character into character data (text data) and outputs the character data as a result of the character recognition processing. The control unit 31 acquires the result of the character recognition processing performed by the DL engine 37.

The DL engine 37 is also a type of OCR engine for performing character recognition processing. However, the DL engine 37 is different from the OCR engine 36 used in step S110 in that the DL engine 37 is a model for character recognition created by Deep Learning technique that is one of machine learning techniques. The DL engine 37 is constructed so as to be able to automatically learn features of an image for learning and classify inputted images by, for example, inputting a large amount of images into a multilayer structure neural network. Specifically, the DL engine 37 has learned about limited types of characters such as numeric characters "0" to "9" and words "YEAR", "MONTH", "DATE", "HOUR", and "MINUTE", based on tens of thousands of images for learning. Therefore, the DL engine 37 can estimate an inputted image from among the numeric characters "0" to "9" and the words "YEAR", "MONTH", "DATE", "HOUR", and "MINUTE" at a high degree of accuracy (at a correct answer rate at least higher than that of the OCR engine 36).

Therefore, the character recognition processing performed by the DL engine 37 is called second character recognition processing whose character recognition accuracy is higher than that of the first character recognition processing. Step S150 corresponds to a second character recognition step that performs the second character recognition processing on the target areas specified in step S130. The storage unit 34 that stores the DL engine 37 and the processor (CPU 31a) that realizes the character recognition processing by using the DL engine 37 correspond to a second character recognition unit that performs the second character recognition processing.

As described above, the OCR engine 36 used for the first character recognition processing is an OCR engine that can estimate many types of characters such as a Chinese character, a hiragana character, a katakana character, a numeric character, an alphabet, other symbols, and the like from an inputted image. When comparing the OCR engine 36 with the DL engine 37 used for the second character recognition processing, the number of character types that are recognized by the DL engine 37 (the number of character types that can be estimated by the DL engine 37) is significantly smaller than the number of character types that are recognized by the OCR engine 36. It is not realistic to create a model that performs highly accurate character recognition on many types of characters such as a Chinese character, a hiragana character, a katakana character, a numeric character, an alphabet, other symbols, and the like by using the Deep Learning technique when considering restrictions such as cost of development, performance of computer, time, and the like. Therefore, it can be said that the DL engine 37 is an OCR engine whose character recognition accuracy on limited types of characters is more improved than that of the OCR engine 36 by reducing the number of types of characters to be recognized and using the Deep Learning technique.

Step S150 will be further described. In step S150, the control unit 31 assigns character types that should be recognized by the DL engine 37 to the DL engine 37 according to the specific characters extracted in step S120 and the specific character table 35. According to the example of Fig. 3, in step S120, the control unit 31 extracts the character strings "TRY DATE AND TIME" and "EXIT DATE AND TIME" as keywords KW (specific characters) from the result of the character recognition processing performed on the read image IM in step S110. Therefore, in step S150, the control unit 31 refers to the specific character table 35 and assigns numeric characters "0" to "9" and words "YEAR", "MONTH", "DATE", "HOUR", and "MINUTE" to the DL engine 37 as the character types corresponding to the keywords KW "TRY DATE AND TIME" and "EXIT DATE AND TIME".

The DL engine 37 performs the second character recognition processing on the target areas within a range of the character types assigned as described above. Specifically, when the numeric characters "0" to "9" and the words "YEAR", "MONTH" "DATE", "HOUR" and "MINUTE" are assigned as the character types, the DL engine 37 estimates an inputted processing target character from among the numeric characters "0" to "9" and the words "YEAR", "MONTH", "DATE", "HOUR", and "MINUTE". If the numeric characters "0" to "9" are assigned as the character types corresponding to the specific characters extracted in step S120, the DL engine 37 estimates the inputted processing target character from among the numeric character "0" to "9".

The DL engine 37 outputs a character (character data as a conversion result) estimated from the inputted processing target character (an image of the rectangular area CF) as a result of the character recognition processing along with a degree of certainty. The degree of certainty is a numerical value indicating a certainty level of the result of the character recognition and is represented by a percentage of 0% to 100%. In other words, the DL engine 37 is constructed so as not only to estimate what kind of the character the processing target character is and output character data but also to automatically calculate a certainty level of the estimation based on past learning and output the certainty level as a degree of certainty.

In step S160, the control unit 31 determines whether or not all the characters (images in each rectangular area CF) in the target areas specified in step S130 have been a processing target of step S150. In Fig. 3, only two target areas SA are shown as the target areas specified in step S130. However, as shown in the specific character table 35, for example, an area in the same line as the keyword "FEE" and on the right side of the keyword "FEE" in the read image IM and an area in the next line of the keyword "FEE" and on the right side of the keyword "FEE" are specified as one of the target areas in step S130. When a character that has not been a processing target of step S150 remains in the target areas specified in step S130 ("No" in step S160), the control unit 31 returns to step S140 and acquires one character that is in the target areas specified in step S130 and has not been a processing target of step S150 as a processing target of the next step S150. On the other hand, when all the characters in the target areas specified in step S130 have been a processing target of step S150 ("Yes" in step S160), the control unit 31 proceeds to step S170.

In step S170, the control unit 31 stores the result of the character recognition processing of step S150 into the storage server 40. In this case, the control unit 31 stores the result of the character recognition processing of step S150 into the storage server 40 along with the read image acquired in step S100. As a result, for example, character data "AUG. 29, 2017 18:40" and "AUG. 29, 2017 21:04" that represent information of the specific items (the entry date and time and the exit date and time) in the read image IM are stored in the storage server 40 along with the read image IM shown in Fig. 3. As a result, the accuracy of the character data to be stored in the storage server 40 (a matching rate between the character data and the characters written on the document) is secured by the second character recognition processing using the DL engine 37. Thus, the flowchart in Fig. 2 is completed.

When the control unit 31 stores the result of the character recognition processing of step S150 into the storage server 40 in step S170, the control unit 31 may change a storage mode according to the degree of certainty of each character. The control unit 31 has threshold values for the degree of certainty as information in advance. For example, the control unit 31 has a first threshold value of 100% (or about 99% close to 100%) as a threshold value for the degree of certainty of the numeric characters "0" to "9" among the character types that can be recognized by the DL engine 37. Further, the control unit 31 has a second threshold value of, for example, 80% as a threshold value for the degree of certainty of the words "YEAR", "MONTH", "DATE", "HOUR", and "MINUTE" among the character types that can be recognized by the DL engine 37.

A case where the character data "AUG. 29, 2017 18:40" and "AUG. 29, 2017 21:04" that are the result of the character recognition processing of step S150 described above are stored in the storage server 40 will be described as an example. The character data "AUG. 29, 2017 18:40" and "AUG. 29, 2017 21:04" are information outputted by the DL engine 37 along with the degree of certainty of each character. The control unit 31 compares the degree of certainty of each character of the character data with the threshold value. Specifically, regarding the character data of the result of the character recognition processing of step S150, the degree of certainty of each character of the numeric characters is compared with the first threshold value, and the degree of certainty of each character of the words is compared with the second threshold value.

The control unit 31 stores characters whose degree of certainty is greater than or equal to the compared threshold value among the character data of the result of the character recognition processing of step S150 into the storage server 40. On the other hand, the control unit 31 does not simply store a character whose degree of certainty is smaller than the compared threshold value into the storage server 40, but stores the character into the storage server 40 after attaching information indicating that the character is unidentifiable, for example, attaching a flag (first flag) indicating that the character is unidentifiable.

For example, if the degree of certainty of the thirteenth character "8" from the top of the character data "AUG. 29, 2017 18:40" that is the result of the character recognition processing of step S150 is 90% that is smaller than the first threshold value, the control unit 31 stores the thirteenth character "8" into the storage server 40 after attaching the first flag to the thirteenth character "8". However, in the storage result, whether the degree of certainty is greater than or equal to the threshold value or smaller than the threshold value may be known for each character. Therefore, the control unit 31 may store a character whose degree of certainty is greater than or equal to the compared threshold value among the character data of the result of the character recognition processing of step S150 into the storage server 40 after attaching a second flag indicating that the character is a correct character.

Among the character data of the result of the character recognition processing of step S150, a character that has not been correctly recognized by the DL engine 37, that is, a character attached with the first flag or a character that is not attached with the second flag, can be determined by visual observation by human being. Specifically, an operator that operates the storage server 40 causes a predetermined display unit to display the read image stored in the storage server 40 and the character data which is the result of the character recognition processing of step S150 and is stored along with the read image. Then the operator may perform a character edit operation for determining a character attached with the first flag or a character that is not attached with the second flag among the displayed character data while visually observing the read image.

Of course, the main server 30 may receive the character edit operation performed by the operator. Specifically, the control unit 31 makes determination of "Yes" in step S160 and thereafter compares the degree of certainty and the threshold value for each character of the character data of the result of the character recognition processing of step S150 and performs processing of attaching the flag described above according to a result of the comparison. Then, the control unit 31 causes a predetermined display unit to display the read image and the character data which is the result of the character recognition processing of step S150 and which corresponds to the read image and then receives the character edit operation performed by the operator. Then, the control unit 31 may store the character data on which the character edit operation is performed into the storage server 40 along with the read image (step S170).

The character data that is stored in the storage server 40 along with the read image is provided to the outside through the network NW. The character data stored in the storage server 40 is character strings that represent contents such as a transaction partner, a transaction date (transaction date and time), and a transaction amount that are written on a document such as a receipt and a bill. Therefore, the character data stored in the storage server 40 is transmitted to, for example, a terminal operated by an accounting firm that performs accounting processing and tax processing through the network NW and is used in the information processing and the tax processing. Further, the character data stored in the storage server 40 is printed by a printer coupled to the network NW and/or transmitted to the communication device 20 through the network NW in response to a request from the communication device 20 and a user of the scanner 10.

### 3. Conclusion:

As described above, according to the present embodiment, the image processing device (main server 30) includes an acquisition unit that acquires a read image generated by reading a receipt or a bill, a first character recognition unit that performs first character recognition processing, a second character recognition unit that performs second character recognition processing whose character recognition accuracy is higher than that of the first character recognition processing, a storage unit 34 that stores in advance relevant information (the specific character table 35) where a specific character and a position of a target area to be a target of the second character recognition processing are related to each other, and a control unit 31. The control unit 31 extracts specific characters from the result of the first character recognition processing performed on the read image by the first character recognition unit in step S120, specifies a target area in the read image based on the extracted specific characters and the relevant information (the specific character table 35) in step S130, and causes the second character recognition unit to perform the second character recognition processing on the specified target area in step S150.

According to the configuration described above, the image processing device extracts specific characters from the result of the first character recognition processing performed on the read image and performs the second character recognition processing on only the target area corresponding to the extracted specific characters. Therefore, in a document such as a receipt or a bill, it is possible to efficiently detect character information written corresponding to the specific characters with high character recognition accuracy.

Further, according to the present embodiment, the relevant information (the specific character table 35) defines a positional relationship of the target area with respect to the specific characters as a position of the target area. In other words, a relative position of the target area with respect to the specific characters is defined in the specific character table 35, so that the control unit 31 can correctly and easily specify the target area in the read image. However, in the specific character table 35, the position of the target area corresponding to the specific characters may be defined by, for example, coordinate information or the like with reference to a predetermined origin in the read image.

Further, according to the present embodiment, the second character recognition unit performs the second character recognition processing by using a model for character recognition (the DL engine 37) created by machine learning. Thereby, it is possible to surely improve the character recognition accuracy for the character information written corresponding to the specific characters on a document such as a receipt or a bill.

Further, according to the present embodiment, the number of character types that are recognized by the second character recognition unit is smaller than the number of character types that are recognized by the first character recognition unit. In other words, the number of character types that are recognized (the number of character types that can be estimated) by the DL engine 37 used for the second character recognition processing is smaller than the number of character types that are recognized by the OCR engine 36 used for the first character recognition processing. An OCR engine (the DL engine 37) whose character recognition accuracy is improved by machine learning by significantly reducing the number of character types to be a target of character recognition as compared with the general-purpose OCR engine 36 is realized.

Further, according to the present embodiment, the control unit 31 assigns character types to be recognized to the second character recognition unit according to the specific characters extracted from the result of the first character recognition processing performed on the read image in step S150, and the second character recognition unit performs the second character recognition processing on the target area specified in step S130 within a range of the assigned character types.

According to the configuration described above, the image processing device performs the second character recognition processing within a range of the character types according to the specific characters extracted from the read image. Therefore, the second character recognition processing can be efficiently performed. Specifically, the range of character types to be outputted as an estimation result in the character recognition processing using the DL engine 37 is further limited according to the extracted specific characters, so that it is possible to accelerate the character recognition processing that uses the DL engine 37.

### 4. Other Embodiments

Embodiments of the present disclosure are not limited to the aspect described above, and, for example, the embodiments include the various aspects described below. The embodiment described so far is also called a first embodiment for convenience sake. A combination of the embodiments is also included in a disclosed range of the present specification.

### Second Embodiment:

The main server 30 may include a plurality of second character recognition units whose recognizable character types are different from each other. Specifically, the storage unit 34 stores a plurality of DL engines 37 whose recognizable character types are different from each other. A processor (CPU 31a) in a case where character recognition processing is realized by using one DL engine 37 functions as one second character recognition unit, and a processor (CPU 31a) in a case where character recognition processing is realized by using another DL engine 37 functions as another second character recognition unit.

It is assumed that the storage unit 34 stores a DL engine 37 (hereinafter referred to as a numeric character DL engine 37) whose recognizable character types are limited to numeric characters "0" to "9" and a DL engine 37 (hereinafter referred to as a word DL engine 37) whose recognizable character types are limited to words "YEAR", "MONTH", "DATE", "HOUR", and "MINUTE". The numeric character DL engine 37 estimates an inputted image from among of the numeric characters "0" to "9" at a high degree of accuracy (at a correct answer rate at least higher than that of the OCR engine 36). The word DL engine 37 estimates an inputted image from among the words "YEAR", "MONTH", "DATE", "HOUR", and "MINUTE" at a high degree of accuracy (at a correct answer rate at least higher than that of the OCR engine 36).

In step S150, the control unit 31 selects a second character recognition unit from among the plurality of second character recognition units according to the specific characters extracted in step S120, and causes the selected second character recognition unit to perform the second character recognition processing on the target areas specified in step S130. That is, the control unit 31 selects a DL engine 37 corresponding to the character types to be recognized according to the specific characters extracted in step S120 and the specific character table 35.

As in the example described above, when the control unit 31 extracts the character strings "TRY DATE AND TIME" and "EXIT DATE AND TIME" as keywords KW (specific characters) from the result of the character recognition processing performed on the read image IM in step S110, the control unit 31 refers to the specific character table 35 and grasps that the character types corresponding to the keywords KW "TRY DATE AND TIME" and "EXIT DATE AND TIME" are the numeric characters "0" to "9" and the words "YEAR", "MONTH" "DATE", "HOUR" and "MINUTE". In this case, the control unit 31 selects both the numeric character DL engine 37 and the word DL engine 37 and uses the numeric character DL engine 37 and the word DL engine 37 for the character recognition processing in step S150. When the control unit 31 uses the numeric character DL engine 37 and the word DL engine 37 for the character recognition processing in step S150, the control unit 31 inputs the processing target character acquired in step S140 into, for example, the numeric character DL engine 37 and acquires a result (character data and the degree of certainty) of the character recognition processing performed by the numeric character DL engine 37. When the degree of certainty outputted from the numeric character DL engine 37 is greater than or equal to the first threshold value, the control unit 31 proceeds to step S160. On the other hand, when the degree of certainty outputted from the numeric character DL engine 37 is smaller than the first threshold value, the control unit 31 inputs the processing target character acquired in step S140 into the word DL engine 37, acquires a result (character data and the degree of certainty) of the character recognition processing performed by the word DL engine 37, and then proceeds to step S160.

When the control unit 31 extracts, for example, the character string "TELEPHONE" as a keyword from the result of the character recognition processing performed on the read image IM in step S110, the control unit 31 refers to the specific character table 35 and grasps that the character types corresponding to the keyword "TELEPHONE" are the numeric characters "0" to "9". In this case, the control unit 31 selects the numeric character DL engine 37 and uses the numeric character DL engine 37 for the character recognition processing in step S150.

According to the second embodiment as described above, the control unit 31 selects a second character recognition unit more suitable for the second character recognition processing from among the plurality of second character recognition units according to the specific characters extracted from the read image, so that the control unit 31 can efficiently perform the second character recognition processing.

Needless to say, the description that the character types that are recognized by the DL engine 37 (the character types that can be estimated by the DL engine 37) are the numeric characters "0" to "9" and the words "YEAR", "MONTH", "DATE", "HOUR", and "MINUTE" is only an example. Considering the actual state of documents written on a receipt or a bill, the character types recognized by the DL engine 37 may include, for example, a word "YEN", a symbol "¥" representing YEN, a hyphen "-", and the like. The character types which the specific character table 35 defines according to keywords may also include "YEN", "¥", "-", and the like.

### Third Embodiment:

In the first embodiment or the second embodiment, the control unit 31 of the main server 30 may further perform processing shown in Fig. 5. Fig. 5 shows a flowchart of processing performed by the control unit 31 after step S150 shown in Fig. 2 and before step S160.

In step S152, the control unit 31 determines whether or not the degree of certainty indicated by the result of the character recognition processing in step S150 is greater than or equal to a predetermined threshold value, and when the degree of certainty is greater than or equal to the threshold value, the control unit 31 determines "Yes" and proceeds to step S160. On the other hand, when the degree of certainty is smaller than the threshold value, the control unit 31 determines "No" and proceeds to step S154. As described above, the threshold value used for the determination in step S152 is a threshold value that varies according to the type of the character outputted as a result of the character recognition processing in step S150. According to the examples described so far, the threshold value is the first threshold value or the second threshold value.

In step S154, the control unit 31 determines whether or not the character outputted as a result of the character recognition processing in step S150 corresponds to a predetermined similar relation character. The similar relation character is a character in a combination of characters that are difficult to be distinguished from each other in the character recognition processing. As an example, the numeric characters "6" and "8" are easily confused with each other in the character recognition processing. For example, a character "6" may be falsely recognized as "8", and conversely, a character "8" may be falsely recognized as "6". Therefore, the numeric characters "6" and "8" are a kind of similar relation characters. When the character outputted as a result of the character recognition processing in step S150 corresponds to any one of the similar relation characters, the control unit 31 determines "Yes" and proceeds to step S156, and when the character corresponds to no similar relation character, the control unit 31 determines "No" and proceeds to step S160.

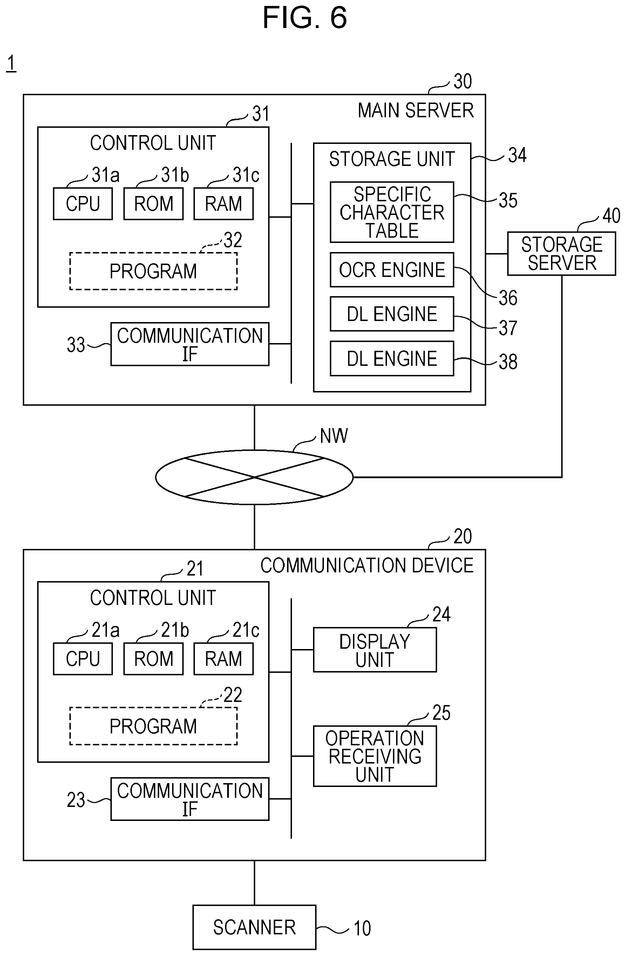

In step S156, the control unit 31 starts an DL engine 38 (see Fig. 6), which is an OCR engine dedicated for similar relation characters, and causes the DL engine 38 to perform character recognition processing on the processing target character acquired in step S140.

Fig. 6 simply shows a configuration of a system 1 according to the third embodiment. Fig. 6 is different from the configuration shown in Fig. 1 in that the storage unit 34 stores a program of the DL engine 38.

The DL engine 38 is also a model for character recognition created by the Deep Learning technique and is created by learning specialized for distinguishing a similar relation character. For example, the DL engine 38 that recognizes only the numeric character "6" and the numeric character "8" having a similarity relationship with the numeric character "6" can estimate whether an inputted image is the numeric character "6" or "8" at a high degree of accuracy (at a correct answer rate higher than that of the DL engine 37). In the same manner as the DL engine 37, the DL engine 38 also outputs character data and the degree of certainty as a result of the character recognition processing.

For example, when the character recognition processing of step S150 is performed on the processing target character acquired in step S140, and thereby character data of the numeric character "6" is obtained and the degree of certainty is 85%, the control unit 31 determines that the degree of certainty is smaller than a threshold value (in this case, the first threshold value) in step S152 and proceeds to step S154. Then, the control unit 31 proceeds from step S154 to step S156 because the numeric character "6" is one of the similar relation characters. In step S156, the character recognition processing is performed on the processing target character acquired in step S140 by using the DL engine 38 that recognizes only the numeric character "6" and the numeric character "8" having a similarity relationship with the numeric character "6". As a result of step S156, the control unit 31 acquires a result of the character recognition processing performed by the DL engine 38, and proceeds to step S160. When both the character recognition processing of step S150 and the character recognition processing of step S156 are performed on the processing target character acquired in step S140, the control unit 31 preferentially adopts the result of the character recognition processing of step S156 and makes it a target of step S170 described above. When only the character recognition processing of step S150 among the character recognition processing of step S150 and the character recognition processing of step S156 is performed on the processing target character acquired in step S140, of course, the control unit 31 adopts the result of the character recognition processing of step S150 and makes it a target of step S170 described above. A plurality of DL engines 38 are stored in the storage unit 34 according to combinations of similar relation characters (for example, a combination of numeric characters "6" and "8" and a combination of numeric characters "1" and "7". The control unit 31 may select a DL engine 38 corresponding to the similar relation character determined in step S154 and use the selected DL engine 38 for the character recognition processing in step S156.

The execution order of the determination of step S152 and the determination of step S154 may be reversed. Specifically, after step S150, the control unit 31 performs the determination of step S154. When the determination of step S154 is "No", the control unit 31 proceeds to step S160, and when the determination of step S154 is "Yes", the control unit 31 proceeds to step S152. Further, when the determination of step S152 is "Yes", the control unit 31 proceeds to step S160, and when the determination of step S152 is "No", the control unit 31 proceeds to step S156.

According to the third embodiment as described above, when, as a result of the second character recognition processing performed by the second character recognition unit on the target areas specified in step S130, a recognition result indicating that a processing target character included in the target areas is a predetermined character (one of the similar relation characters) is outputted, and further, the degree of certainty that indicates a certainty level of the recognition result of the processing target character is smaller than a predetermined threshold value, the control unit 31 causes a third character recognition unit (a processor (CPU 31a) in a case where character recognition processing is realized by using the DL engine 38) that performs character recognition processing, where recognizable character types are limited to the predetermined character and a predetermined similar character similar to the predetermined character, to perform character recognition processing on the processing target character. According to the configuration described above, the character recognition processing is performed by the third character recognition unit that highly accurately estimates whether a character that cannot be accurately recognized by the second character recognition processing (a character whose degree of certainty is smaller than a threshold value) is one character or the other character included in a combination of characters having a similarity relationship with each other. As a result, in a document such as a receipt or a bill, it is possible to detect character information written corresponding to the specific characters with high character recognition accuracy.

### Other Explanations:

As a specific example of the image processing device according to the present disclosure, the main server 30 included in the system 1 has been described. However, the specific example of the image processing device is not limited to the main server 30. For example, the communication device 20 that acquires a read image of a document from the scanner 10 may realize the image processing device of the present disclosure by using its own resources. Specifically, in the communication device 20, a configuration may be employed where the specific character table 35, the OCR engine 36, the DL engines 37 and 38, and the like are stored in a storage means such as the ROM 21b and/or a memory other than the ROM 21b, and the control unit 21 performs the processing described with reference to Figs. 2 to 6 according to the program 22. In this case, the communication device 20 may use a storage means such as a memory of its own or an external server (for example, the storage server 40) as a storage destination of the read image and the character data in step S170 (storage processing).

The OCR engine 36 and the DL engine 37 and 38 need not be software stored in the storage unit 34 or a memory, but may be hardware that functions in cooperation with software. In this case, the OCR engine 36 itself can be called the first character recognition unit, the DL engine 37 itself can be called the second character recognition unit, and the DL engine 38 itself can be called the third character recognition unit.

The second character recognition unit may be a character recognition unit that realizes character recognition processing with a character recognition accuracy higher than that of the first character recognition unit. In that sense, the second character recognition processing performed by the second character recognition unit is not limited to processing where the DL engine created by the Deep Learning technique is used. The second character recognition processing performed by the second character recognition unit may be character recognition processing performed by, for example, a processing unit which is created by a machine learning method other than the Deep Learning and whose character recognition accuracy for characters (for example, numeric characters and the like) in a range smaller than that of the OCR engine 36 is improved.

The foregoing description has been given by way of example only and it will be appreciated by a person skilled in the art that modifications can be made without departing from the scope of the present invention as defined by the claims.

## Claims

1. An image processing device (30) comprising:
an acquisition unit that acquires a read image generated by reading a receipt or a bill;
a first character recognition unit that performs first character recognition processing on the read image;
a second character recognition unit that performs second character recognition processing whose character recognition accuracy is higher than that of the first character recognition processing;
a storage unit (34) that stores in advance relevant information (35) where a specific character and a position of a target area to be a target of the second character recognition processing are related to each other; and
a control unit (31) that extracts the specific character from a result of the first character recognition processing performed by the first character recognition unit, specifies the target area in the read image based on the extracted specific character and the relevant information (35), and causes the second character recognition unit to perform the second character recognition processing on the specified target area.

2. The image processing device (30) according to Claim 1, wherein the relevant information defines a positional relationship of the target area with respect to the specific character as a position of the target area.

3. The image processing device (30) according to Claim 1 or claim 2, wherein the control unit (31) assigns a character type to be recognized to the second character recognition unit according to the extracted specific character, and the second character recognition unit performs the second character recognition processing on the target area within a range of the assigned character type.

4. The image processing device (30) according to any one of the preceding claims, further comprising:
a plurality of the second character recognition units whose recognizable character types are different from each other, wherein
the control unit (31) selects a second character recognition unit from among a plurality of the second character recognition units according to the extracted specific character, and causes the selected second character recognition unit to perform the second character recognition processing on the target area.

5. The image processing device (30) according to any one of the preceding claims, wherein when, as a result of the second character recognition processing performed on the target area by the second character recognition unit, a recognition result indicating that a processing target character included in the target area is a predetermined character is outputted, and a degree of certainty that indicates a certainty level of the recognition result for the processing target character is smaller than a predetermined threshold value, the control unit (31) causes a third character recognition unit that performs character recognition processing, where recognizable character types are limited to the predetermined character and a predetermined similar character similar to the predetermined character, to perform character recognition processing on the processing target character.

6. The image processing device (30) according to any one of the preceding claims, wherein the second character recognition unit performs the second character recognition processing by using a model for character recognition created by machine learning.

7. The image processing device (30) according to any one of the preceding claims, wherein the number of character types that are recognized by the second character recognition unit is smaller than the number of character types that are recognized by the first character recognition unit.

8. An image processing method comprising;
acquiring a read image generated by reading a receipt or a bill (S100);
performing first character recognition processing on the read image (S110);
extracting a specific character from a result of the first character recognition processing (S120);
specifying a target area in the read image based on the extracted specific character and relevant information (35) where the specific character stored in a storage unit (34) in advance and a position of the target area to be a target of second character recognition processing are related to each other (S130); and
performing the second character recognition processing, whose character recognition accuracy is higher than that of the first character recognition processing, on the specified target area (S150).

9. An image processing program causing a computer to perform:
an acquisition function of acquiring a read image generated by reading a receipt or a bill;
a first character recognition function of performing first character recognition processing on the read image;
an extraction function of extracting a specific character from a result of the first character recognition processing;
a target area specification function of specifying a target area in the read image based on the extracted specific character and relevant information (35) where the specific character stored in a storage unit (34) in advance and a position of the target area to be a target of second character recognition processing are related to each other; and
a second character recognition function of performing the second character recognition processing, whose character recognition accuracy is higher than that of the first character recognition processing, on the specified target area.

10. An image processing device (30) comprising:
an acquisition unit that acquires a read image generated by reading a receipt or a bill;
a first character recognition unit that performs first character recognition processing on the read image;
a second character recognition unit that performs second character recognition processing using a model for character recognition created by machine learning;
a storage unit (34) that stores in advance relevant information (35) where a specific character and a position of a target area to be a target of the second character recognition processing are related to each other; and
a control unit (31) that extracts the specific character from a result of the first character recognition processing performed by the first character recognition unit, specifies the target area in the read image based on the extracted specific character and the relevant information, and causes the second character recognition unit to perform the second character recognition processing on the specified target area.
